# FASCICULE DE BREVET EUROPEEN

(11) **EP 1 763 195 B1**
(45) Date de publication et mention de la délivrance du brevet: **07.11.2012**
(21) Numéro de dépôt: 06120093.7
(22) Date de dépôt: 05.09.2006
(51) Int. Cl.: H04L 29/06, G06Q 30/00, H04L 12/18, H04N 7/00, H04L 29/08

(54) **Système et procédé de diffusion de contenus personnalisés et éventuellent interactifs à destination de terminaux rattachés à un réseau de communication**
System und Verfahren zum Senden personalisierten möglicherweise interaktiven Inhalts an Endgeräte, die an ein Kommunikationsnetzwerk angeschlossen sind
System and process for broadcasting personalized and possibly interactive content to terminals connected to a communication network

(30) Priorité: 08.09.2005 FR 0552710
(43) Date de publication de la demande: 14.03.2007
(73) Titulaire: Alcatel Lucent, 75007 Paris (FR)
(72) Inventeur: Marilly, Emmanuel, 91240, Saint-Michel-sûr-Orge (FR); Delegue, Gérard, 94230, Cachan (FR); Martinot, Olivier, 91210, Draveil (FR); Betge-Brezetz, Stéphane, 75015, Paris (FR)
(74) Mandataire: Sciaux, Edmond

(56) Documents cités:
- EP-A- 1 455 294
- US-A- 6 029 045
- US-A1- 2002 112 249
- US-A1- 2003 033 157

## Description

L'invention concerne les réseaux de communication fixe ou mobile, et plus précisément la diffusion par de tels réseaux de contenus à destination de terminaux de communication aptes à recevoir des contenus diffusés et disposant d'une fonction de communication (par exemple de type GSM, GPRS, UMTS ou WiFi).

On entend ici par « contenu » des ensembles volumineux de données définissant un programme de télévision ou de vidéo ou audio (radiophonique ou musical) ou de jeux ou multimédia ou encore un fichier informatique (ou « data »).

Afin de satisfaire le plus grand nombre possible de clients, les diffuseurs de contenus doivent mettre à leur disposition des services personnalisés ou bien des groupes de services parmi lesquels ils peuvent effectuer des choix de façon interactive. Aujourd'hui, aucune solution n'a été proposée pour parvenir à cet objectif. En effet, un diffuseur de contenus ne peut que proposer à tous ses clients un unique service interactif qui est censé correspondre au plus gros sous-ensemble d'entre eux, défini par un profil moyen. Par exemple, un diffuseur de programmes de télévision ne peut que diffuser une même question relative à une émission, à destination de tous les terminaux susceptibles de recevoir ses programmes. Cela ne constitue pas un service personnalisé.

Dans le document EP- A-1 455 294, il est fourni un contenu (e.g. une publicité) en fonction de l'identité et de la localisation de l'utilisateur final. Le contenu en question s'insère à des moments précis (e.g. page de publicité) dans le contenu de diffusion qui est segmenté (e.g. émission de Télévision).

Dans le document US-A-6 029 045, la diffusion utilise un contenu additionnel qui est stocké sur une set-top box.

Le document US 2003/033157 A1 traite de la télévision augmentée.

Le document US 2002/112249 A1 décrit un système de fourniture d'un objet virtuel qui est intégré à un signal de contenu vidéo qui fournit l'objet virtuel lui-même ou qui identifie un objet virtuel accessible au site récepteur.

L'invention a donc pour but d'améliorer la situation, et notamment de permettre la personnalisation et l'adaptation du contenu interactif transmis à des terminaux d'utilisateurs en fonction, par exemple, de leurs profils d'utilisateur.

L'objet de l'invention est défini dans les revendications indépendantes 1 et 11. Des modes de réalisation préférés de l'invention sont définis dans les revendications dépendantes.

Elle propose à cet effet un procédé de diffusion de flux de données de contenu à destination de terminaux de communication rattachés au moins à un premier réseau de diffusion, consistant :
- à insérer au moins des points d'interactivité dans des endroits choisis de contenus à diffuser sous forme de flux, correspondant chacun au déclenchement à un instant choisi d'une application de service appartenant à un groupe d'au moins deux applications choisies, et
- en cas de réception de tels flux diffusés au niveau d'un terminal destinataire, à afficher les données qu'ils contiennent, et en cas de détection d'un point d'interactivité dans les flux diffusés, à déterminer l'application de service qui lui correspond en fonction d'au moins un critère choisi relatif à l'utilisateur du terminal et/ou au terminal, afin que cette application de service soit exécutée par le terminal.

Le procédé selon l'invention peut comporter d'autres caractéristiques qui peuvent être prises séparément ou en combinaison, et notamment :
(par exemple ses goûts, son age ou son sexe), un critère de type de terminal et un critère de localisation de terminal, ainsi qu'éventuellement un critère de type de voie de retour (ou « back channel ») utilisée dans le cas d'un service interactif ;
- certaines applications de service peuvent par exemple être de type interactif;
   ➢ les applications de service interactives peuvent par exemple être choisies parmi une application de pari, une application de vote, une application d'achat et une application de téléchargement de données personnalisées (comme par exemple des sonneries de téléphone, des textes, des vidéos et des publicités) ;
   ➢ en cas d'exécution d'une application de service interactive dans un terminal, on peut procéder à l'échange de messages par une voie de retour établie entre ce terminal et une adresse choisie du premier réseau (lorsqu'il assure à la fois la diffusion (monodirectionnelle) et les communications bidirectionnelles (voie de retour)) ou d'un second réseau de communication bidirectionnel (disposant des voies de retour), sous contrôle de l'utilisateur du terminal ;
- l'une au moins des applications de service peut par exemple être dédiée à l'affichage d'au moins une publicité choisie ;
- on peut intégrer dans les contenus à diffuser les données qui représentent les applications de service de chaque groupe correspondant à un point d'interactivité. Ainsi, on peut déterminer dans un terminal l'application de service à exécuter en fonction de chaque critère choisi (défini par l'utilisateur du terminal ou par l'opérateur de diffusion (dans ce dernier cas chaque définition de critère est transmise au terminal correspondant via une voie de retour)) ;
- dans une première variante, on peut intégrer dans les contenus à diffuser des données qui représentent une première partie de chaque application de service de chaque groupe correspondant à un point d'interactivité. Ainsi, en cas de détection d'un point d'interactivité dans un terminal, on peut transmettre à une adresse choisie du réseau, via une voie de retour, une requête d'obtention de chaque seconde partie complémentaire d'une première partie d'application de service reçue, puis, à réception de chaque seconde partie, on peut déterminer dans le terminal l'application de service en fonction de chaque critère choisi (défini par l'utilisateur du terminal ou par l'opérateur de diffusion), afin qu'elle puisse être exécutée ;
- dans une seconde variante, en cas de détection d'un point d'interactivité dans un terminal, on peut transmettre à une adresse choisie du réseau, via une voie de retour, une requête d'obtention d'application de service. Dans ce cas, à réception de cette requête, on peut déterminer l'application de service requise en fonction de chaque critère correspondant au terminal requérant (et défini par l'opérateur de diffusion), et on peut transmettre au terminal requérant l'application de service afin qu'il puisse l'exécuter.

L'invention propose également un système de diffusion de flux de données de contenu à destination de terminaux de communication rattachés au moins à un premier réseau de diffusion, comprenant au moins :
- des moyens de définition de contenus de données chargés d'insérer au moins des points d'interactivité dans des endroits choisis de contenus à diffuser sous forme de flux, correspondant chacun au déclenchement à un instant choisi d'une application de service appartenant à un groupe d'au moins deux applications choisies,
- un serveur de contenus chargé de diffuser, via le premier réseau, à destination de terminaux des flux de données de contenus fournis par les moyens de définition, et
- des moyens de traitement implantés dans des terminaux de communication (comportant également des moyens d'affichage chargés d'afficher des données contenues dans des flux reçus du serveur de contenu) et chargés d'analyser les données des flux afin, en cas de détection d'un point d'interactivité, de déterminer l'application de service correspondante en fonction d'au moins un critère choisi relatif à l'utilisateur du terminal et/ou au terminal, et d'ordonner aux moyens d'affichage de leur terminal d'exécuter cette application de service.

Le système selon l'invention peut comporter d'autres caractéristiques qui peuvent être prises séparément ou en combinaison, et notamment :
- chaque critère peut par exemple être choisi parmi un critère de profil d'utilisateur de terminal, un critère de type de terminal et un critère de localisation de terminal, ainsi qu'éventuellement un critère de type de voie de retour (utilisée dans le cas d'un service interactif) ;
- il peut comprendre un équipement de contrôle, accessible par une voie de retour du premier réseau ou d'un second réseau de communication bidirectionnelle, à une adresse choisie, et comportant des moyens de gestion de requêtes d'application de service, et les moyens de traitement de chaque terminal peuvent être chargés, en cas d'exécution d'une application de service de type interactif par les moyens d'affichage associés, d'échanger des messages avec les moyens de gestion de requête d'application de service, via une voie retour établie entre son équipement de contrôle et le terminal, sous contrôle de l'utilisateur du terminal ;
- les moyens de définition peuvent être chargés d'intégrer dans les contenus à diffuser les données qui représentent les applications de service de chaque groupe correspondant à un point d'interactivité. Dans ce cas, les moyens de traitement de chaque terminal peuvent être chargés de déterminer l'application de service, qui doit être exécutée par les moyens d'affichage associés, en fonction de chaque critère choisi (par exemple stocké localement et défini par l'utilisateur du terminal ou par l'opérateur de diffusion et transmis au terminal correspondant via la voie de retour) ;
- dans une première variante, les moyens de définition peuvent être chargés d'intégrer dans les contenus à diffuser des données représentatives d'une première partie de chaque application de service de chaque groupe correspondant à un point d'interactivité. Dans ce cas, l'équipement de contrôle peut comprendre des moyens de contrôle chargés de déterminer sur requête des données représentatives de secondes parties d'applications de service, complémentaires des premières parties. Les moyens de traitement de chaque terminal peuvent alors être chargés, en cas de détection d'un point d'interactivité, d'adresser à l'équipement de contrôle, via la voie de retour, une requête d'obtention des secondes parties complémentaires des premières parties d'application de service reçues, et, à réception de chaque seconde partie, de déterminer l'application de service en fonction de chaque critère choisi (par exemple stocké localement et défini par l'utilisateur du terminal ou par l'opérateur de diffusion et transmis au terminal correspondant via la voie de retour), et d'ordonner aux moyens d'affichage associés d'exécuter cette application de service.
- dans une seconde variante, les moyens de traitement de chaque terminal peuvent être chargés, en cas de détection d'un point d'interactivité, d'adresser à l'équipement de contrôle, via la voie de retour, une requête d'obtention d'application de service. Dans ce cas, l'équipement de contrôle peut comprendre des moyens de contrôle chargés, à réception d'une requête d'obtention d'application de service, de déterminer chaque définition de critère correspondant au terminal requérant et des données représentatives d'applications de service, puis de déterminer l'application de service requise en fonction de chaque critère déterminé, et de générer un message comportant des données représentatives de l'application de service déterminée afin que l'équipement de contrôle le transmette au terminal requérant via la voie de retour, puis que les moyens d'affichage du terminal exécutent cette application de service sous le contrôle de ses moyens de traitement.

L'invention est particulièrement bien adaptée, bien que de façon non exclusive, à un réseau de diffusion monodirectionnelle, comme par exemple un réseau « broadcast » (terrestre (DVB-H ou câblé) ou satellitaire (SDMB (« Satellite Digital Media Broadcast » - diffusion de média numérique par satellite)), couplé à au moins un réseau de communication bidirectionnelle, comme par exemple un réseau mobile (ou cellulaire), éventuellement satellitaire.

D'autres caractéristiques et avantages de l'invention apparaîtront à l'examen de la description détaillée ci-après, et des dessins annexés, sur lesquels :
- la figure 1 illustre de façon très schématique un premier réseau de diffusion couplé à un second réseau de communication bidirectionnel et à un exemple de réalisation d'un système de diffusion de données selon l'invention, et
- la figure 2 illustre de façon très schématique une partie d'un réseau de communication bidirectionnel et un exemple de réalisation d'un système de diffusion de données selon l'invention.

Les dessins annexés pourront non seulement servir à compléter l'invention, mais aussi contribuer à sa définition, le cas échéant.

L'invention a pour objet de permettre la diffusion, par un réseau de communication, de contenus et de services personnalisés, éventuellement interactifs, à des terminaux de communication (dans certains cas à récepteur mettant en oeuvre deux technologies différentes (par exemple DVB-H et UMTS)), via un ou deux réseaux, dont un dédié à la diffusion.

Cette invention s'applique à tout type de terminal de communication (dans certains cas à récepteur mettant en oeuvre deux technologies différentes, par exemple UMTS et

DVB-H), qu'il soit fixe ou mobile, dès lors que le terminal peut être connecté soit à un réseau de communication fixe et bidirectionnelle assurant à la fois la diffusion monodirectionnelle et les communications bidirectionnelles par des voies de retour (par exemple des réseaux comportant des lignes de transmission de données bidirectionnelles à moyen ou haut débit, tels que des câbles (ou fibres optiques) ou des lignes xDSL), soit à la fois à un réseau de diffusion fixe et monodirectionnelle (par exemple de type DVB-H) et à un réseau de communication bidirectionnel, par exemple mobile ou cellulaire (de préférence de type UMTS ou ses variantes et équivalents), éventuellement par l'intermédiaire d'un modem (modulateur/démodulateur). Il pourra par exemple s'agir d'un téléphone mobile (ou cellulaire), d'un assistant personnel numérique (ou PDA), d'un décodeur de programmes de télévision ou vidéos cryptés, d'un équipement de réception de programmes de télévision de type « Set-top box », d'un équipement de réception de programmes vidéos ou musicaux, ou d'un ordinateur fixe ou portable, ou un équipement embarqué dans un véhicule (voiture, camion, bus, train, et analogues).

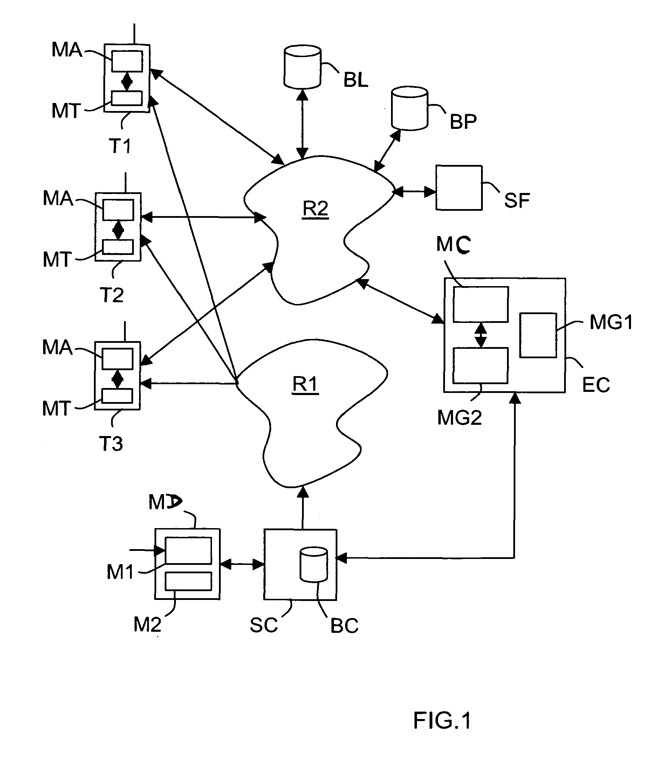

On se réfère à la figure 1 pour décrire un premier exemple de mise en oeuvre de l'invention.

Dans ce premier exemple, un premier réseau R1, dédié à la diffusion monodirectionnelle de contenus vers des terminaux à récepteurs multifréquences, est couplé à un second réseau R2, de type mobile ou cellulaire, dédié aux communications bidirectionnelles par des voies dites de retour.

On considère à titre d'exemple non limitatif que les terminaux de communication (ci-après appelés « terminaux ») sont des téléphones mobiles disposant d'un récepteur mettant en oeuvre deux technologies différentes, l'une de type UMTS qui leur permet de se connecter au second réseau R2 afin d'établir des communications bidirectionnelles, l'autre de type DVB-H (« Digital Video Broadcasting - Handheld terminal » - diffusion de vidéos numériques pour des terminaux mobiles) qui leur permet de se connecter au premier réseau R1 afin de recevoir par voie d'ondes, par exemple, des programmes audio et/ou des programmes de télévision et/ou des programmes vidéo et/ou des programmes multimédia et/ou des jeux et/ou des fichiers de données.

Comme cela est illustré sur la figure 1, l'invention propose un système dédié à la diffusion de flux de données de contenu à destination des terminaux Ti. Dans l'exemple illustré on n'a représenté que trois terminaux mobiles T1 à T3 (i = 1 à 3). Mais, l'indice i peut prendre n'importe quelle valeur supérieure à zéro (0).

Un tel système comprend au moins un module de définition de contenus de données MD, un serveur de contenus à diffuser SC et des modules de traitement MT implantés dans les terminaux Ti.

Le module de définition (de contenus de données) MD comprend par exemple un premier sous-module M1 alimenté en contenus à diffuser, comme par exemple des programmes de télévision ou de vidéo ou de musique (voix), ou des fichiers informatiques. Ce premier sous-module M1 est chargé d'insérer à des endroits choisis des contenus qu'il reçoit au moins des points d'interactivité qui correspondent chacun au déclenchement à un instant choisi d'une application de service appartenant à un groupe d'au moins deux applications choisies. Autrement dit, un point d'interactivité est une espèce de marquage temporel qui est placé dans un contenu avant qu'il ne soit diffusé sous la forme de flux, et qui est associé à un groupe d'applications de service. Par conséquent, lorsqu'un point d'interactivité est détecté dans un flux de données de contenu, il désigne un groupe d'applications de service au sein duquel une application doit être choisie afin d'être exécutée localement, comme on le verra plus loin.

On entend ici par « application de service » une application informatique, interactive ou non, chargée, lorsqu'elle est exécutée par le module d'affichage (ou « viewer ») MA d'un terminal Ti, d'offrir un service à l'utilisateur de ce terminal Ti. Une telle application se présente par exemple sous la forme d'un script exécutable ou d'un programme exécutable.

Parmi les applications de service de type interactif on peut notamment citer les applications de pari, de vote, d'achat et de téléchargement de données personnalisées (comme par exemple des sonneries de téléphone, des textes, des vidéos, des publicités, des jeux, des « quiz », des informations de sécurité, des informations générales ou spécialisées (par exemple boursières, bancaires, gouvernementales ou routières)).

Parmi les applications de service de type non interactif on peut notamment citer les applications d'affichage de publicité(s) et de fourniture non interactive d'informations de sécurité ou d'informations générales ou spécialisées.

Le module de définition MD peut par exemple être implanté dans un ordinateur (ou une station de travail) dont l'interface homme/machine lui permet de piloter le premier sous-module M1.

Les endroits où doivent être placés les points d'interactivité sont choisis par un technicien, travaillant pour le diffuseur de contenus, en fonction des besoins et/ou des contraintes. Ce technicien peut être assisté pour ce faire par un second sous-module M2 du module de définition MD. Ce second sous-module M2 est par exemple agencé de manière à proposer des groupes, éventuellement prédéfinis, d'applications de service correspondant au type de contenu à diffuser. Par exemple, lorsque le technicien doit insérer des points d'interactivité dans un contenu, il détermine le type de ce contenu et recherche dans une liste, qui lui est proposée par le second sous-module M2, le groupe d'applications de service qui correspond au type de contenu. Le second sous-module M2 peut également fournir le point d'interactivité qui correspond à chaque groupe. Bien entendu, le technicien peut définir ses propres groupes et les points d'interactivité correspondant.

Une fois qu'un contenu a fait l'objet d'insertion de points d'interactivité (avec éventuellement le service interactif comme on le verra plus loin), le module de définition MD le communique au serveur de contenus SC. Cette communication peut se faire soit directement (comme illustré sur la figure 1), lorsque le module de définition MD est raccordé physiquement au serveur de contenus SC, soit indirectement via un troisième réseau, par exemple de type IP (Internet), auquel peuvent être connectés le module de définition MD et le serveur de contenus SC.

Le serveur de contenus SC, qui est ici raccordé au premier réseau R1, contient préférentiellement une base de données BC dans laquelle il stocke les contenus à diffuser, communiqués par le module de définition MD. Il est principalement chargé de diffuser à des instants choisis des flux de données de contenu à destination de terminaux Ti qui sont, tout comme lui, rattachés au premier réseau R1. Cette diffusion se fait par les canaux de transmission monodirectionnelle qui sont dédiés à cet effet par le premier réseau R1.

Le serveur de contenus SC peut être également chargé de transmettre aux terminaux Ti la grille des programmes diffusés (fonction dite EPG pour « Electronic Programme Guide ») et/ou de gérer tout ce qui concerne le cryptage ou l'encodage des flux à diffuser et les Droits numériques (Droits d'auteur et protection juridique des contenus).

Chaque module de traitement MT est couplé au module d'affichage (ou viewer) MA du terminal Ti dans lequel il est implanté. Le module d'affichage MA est chargé d'afficher sur l'écran de son terminal Ti les flux de données de contenu qu'il reçoit (ici) du premier réseau R1. Il est également capable d'exécuter des applications de service telles que définies précédemment, c'est-à-dire de les activer et d'afficher sur l'écran les données qu'elles lui communiquent.

Chaque module de traitement MT est chargé d'analyser les données qui sont contenues dans les flux de contenus reçus par le module d'affichage MA auquel il est couplé, afin de détecter chaque point d'interactivité inséré. Par ailleurs, chaque fois que le module de traitement MT détecte un point d'interactivité, il est également chargé de déterminer l'application de service qui lui correspond en fonction d'au moins un critère choisi, relatif au moins à l'utilisateur de son terminal Ti et/ou à son terminal Ti (type et/ou localisation) et/ou à la voie de retour utilisée par son terminal Ti dans le cas d'un service interactif.

Parmi les critères que l'on peut utiliser, on peut notamment citer :
- le critère de profil d'utilisateur de terminal Ti. Un profil peut concerner un seul utilisateur ou un groupe d'utilisateurs. Il peut par exemple concerner une ou plusieurs caractéristiques, comme par exemple la classe d'age, le sexe, les préférences de type de programme, les goûts, les centres d'intérêt, les loisirs, les tranches horaires d'observation des programmes, et d'une manière générale tout ce qui peut permettre de personnaliser un utilisateur ;
- le critère de type de terminal Ti. Le type de terminal Ti désigne ici le système d'exploitation (OS) et/ou les performances (ou capacités) et/ou le Codec supporté et/ou la taille de l'écran et/ou les fonctions mises en oeuvre et/ou l'identification du terminal Ti
- le critère de localisation de terminal Ti. La localisation d'un terminal Ti désigne ici sa position géographique (latitude, longitude et éventuellement altitude) ou son appartenance à une zone géographique. Elle peut être obtenue par tout moyen, et notamment par un équipement GPS implanté dans le terminal mobile Ti, ou par la connaissance de la cellule GSM ou GPRS de rattachement du terminal mobile Ti ou de l'émetteur DVB-H qui diffuse les contenus reçus par le terminal mobile Ti ;
- le critère de type de voie de retour (dans le cas d'un service interactif). Le type d'une voie de retour désigne ici, principalement, ses performances, par exemple en terme de qualité de service (ou QoS) et/ou ses caractéristiques techniques (par exemple UMTS ou GPRS).

Un ou plusieurs critères peuvent être utilisés pour déterminer l'application de service que doit exécuter un terminal Ti.

Le module de traitement MT est également chargé d'ordonner au module d'affichage MA de son terminal Ti d'exécuter chaque application de service qu'il a déterminée.

Lorsque des applications de service de type interactif sont prévues, le système de diffusion selon l'invention doit également comporter un équipement de contrôle EC accessible aux terminaux Ti par le second réseau (de communication) R2, à une adresse choisie.

Cet équipement de contrôle EC est couplé au serveur de contenu SC, de préférence via le réseau de gestion du diffuseur de contenus ou via un troisième réseau, par exemple de type IP.

Il comprend un module de gestion de requêtes d'application de service MG1 chargé d'analyser chaque message ou requête, transmis(e) par un terminal Ti sur une voie dite de retour (ou « back channel ») lorsque son module d'affichage MA exécute une application de service interactive, et d'effectuer les opérations qui découlent du contenu du message ou de la requête. Par exemple, lorsque l'application de service est une application d'achat à distance, le module de gestion de requêtes d'application de service MG1 est chargé d'assurer l'interface entre le terminal Ti qui effectue l'achat et le serveur SF qui vend l'objet de l'achat ou qui contrôle la facturation, lequel est accessible par le second réseau R2. Lorsque l'application de service est une application de vote, le module de gestion de requêtes d'application de service MG1 est par exemple chargé de comptabiliser les résultats des votes. Lorsque l'application de service est une application de pari, le module de gestion de requêtes d'application de service MG1 est par exemple chargé de comptabiliser les résultats des paris ou d'assurer l'interface entre le terminal Ti qui parie et le serveur qui contrôle les paris (par exemple le serveur d'une société de courses hippiques).

Il est important de noter que dans le cadre d'une application interactive, certaines requêtes ou certains messages transmis par un terminal Ti peuvent engendrer en retour la transmission par le module de gestion de requêtes d'application de service MG1, à destination du terminal Ti concerné, d'un ou plusieurs messages (ou requêtes).

Bien entendu, les échanges de messages (ou requêtes) entre un terminal Ti et l'équipement de contrôle EC, dans le cadre de l'exécution d'une application de service interactive, via une voie retour, se fait sous le contrôle de l'utilisateur du terminal Ti. Plus précisément, ce sont les actions effectuées par l'utilisateur au moyen de son terminal Ti, par exemple pour répondre à une question affichée sur son écran, qui déclenche l'émission d'une requête (ou d'un message) à destination de l'équipement de contrôle EC.

Pour procéder à la détermination d'une application de service à exécuter localement (dans un terminal Ti), plusieurs possibilités peuvent être envisagées.

Une première possibilité consiste à agencer le module de définition MD, et plus précisément son premier sous-module M1, de sorte qu'il intègre dans les contenus les données qui représentent les applications de service de chaque groupe correspondant à un point d'interactivité. Par exemple, ces données d'application peuvent être placées juste après le point d'interactivité qui leur est associé. Mais, cela n'est pas obligatoire.

Dans ce cas, le module de définition MD doit soit comporter une mémoire dans laquelle sont stockées toutes les données d'application, soit être capable d'accéder à un équipement accessible par le second réseau R2 et dans lequel sont stockées toutes les données d'application.

Par ailleurs, dans ce cas le module de traitement MT de chaque terminal Ti doit être agencé de manière à déterminer localement l'application de service qui doit être exécutée par le module d'affichage associé en fonction de chaque critère choisi. Pour ce faire, il doit, d'une part, être capable d'extraire les données d'application des flux de données de contenu qui sont reçus par le module d'affichage MA associé, et d'autre part, disposer du ou des critères qui doi(ven)t leur être appliqués afin de sélectionner celles qui représentent l'application qui doit être exécutée localement.

Chaque critère à appliquer localement peut être soit défini localement par l'utilisateur du terminal Ti, soit défini à distance par l'opérateur de diffusion.

Dans la première hypothèse, le module de traitement MT peut par exemple mettre à la disposition de l'utilisateur du terminal Ti une liste dans laquelle il peut sélectionner chaque critère à appliquer. Dans la seconde hypothèse, chaque définition de critère à appliquer est transmise au terminal Ti concerné par l'équipement de contrôle EC, via une voie de retour (du second réseau R2), soit préalablement à la réception des flux (ce qui est préférable pour une question de délai de transmission), soit à la requête du module de traitement MT, consécutivement à la réception de données d'application.

Il est important de noter que les critères appliqués peuvent par exemple varier en fonction des types de programmes et/ou des tranches horaires et/ou du sexe et/ou des goûts et/ou des centres d'intérêt et/ou des loisirs de la personne qui souhaite regarder un programme. Dans ce cas, plusieurs groupes de critères peuvent être stockés soit dans le terminal Ti (et plus précisément dans le module de traitement MT), et l'utilisateur peut choisir l'un d'entre eux en fonction de ses besoins, soit dans l'équipement de contrôle EC, et c'est le diffuseur de contenus qui choisi le groupe à appliquer.

Une fois qu'un module de traitement MT a déterminé une application de service, il la communique au module d'affichage MA de son terminal Ti afin qu'il l'exécute.

Une deuxième possibilité consiste à agencer chaque module de traitement MT de sorte que chaque fois qu'il détecte un point d'interactivité il adresse à l'équipement de contrôle EC (par le biais de son terminal Ti et via la voie de retour du second réseau R2) une requête d'obtention d'application de service, contenant de préférence l'identifiant du point d'interactivité détecté.

Dans ce cas, l'équipement de contrôle EC comprend par exemple un module de contrôle MC chargé, lorsqu'il reçoit une requête d'obtention d'application de service en provenance d'un terminal Ti (sur une voie de retour du second réseau R2), de déterminer chaque définition de critère qui correspond au terminal requérant Ti (et à son utilisateur) ainsi que des données (d'application) représentatives d'applications de service auxquelles il va appliquer chaque critère choisi afin de sélectionner celles qui représentent une application de service choisie pour le terminal requérant Ti.

Pour permettre ces déterminations, d'une part, l'équipement de contrôle EC peut par exemple comprendre (comme illustré) un module de génération MG2 dans lequel sont stockés des groupes d'applications de service et des groupes de critère(s) en correspondance de points d'interactivité, et d'autre part, il faut prévoir des premiers moyens de mémorisation BP, chargés de stocker les profils d'utilisateur et/ou les types des terminaux clients Ti, et/ou des seconds moyens de mémorisation BL, chargés de stocker les localisations des terminaux Ti.

Les groupes d'applications de service sont définis par un technicien du diffuseur au moyen du module de génération MG2 qui lui sert d'interface. Ils sont par exemple constitués en fonction des types des contenus.

Les premiers BP et/ou seconds BL moyens de mémorisation peuvent par exemple faire partie de l'équipement de contrôle EC, ou appartenir au diffuseur de contenus, ou encore, comme dans l'exemple illustré sur la figure 1, être accessibles à l'équipement de contrôle EC par le second réseau R2 auquel il est connecté. Dans le second cas, l'équipement de contrôle EC accède aux premiers BP et/ou seconds BL moyens de mémorisation via le second réseau R2 et via un troisième réseau, par exemple de type IP, auquel ils sont connectés. Dans le troisième cas, il peut par exemple s'agir de moyens de mémorisation de l'opérateur du second réseau R2, qui n'est pas forcément le même que le diffuseur de contenus qui utilise le premier réseau R1. Par exemple dans un second réseau R2 de type mobile, d'une part, les seconds moyens de localisation peuvent être la base de données de localisation ou HLR (pour « Home Location Register ») qui fait partie du coeur de réseau (ou « Core Network »), et d'autre part, les premiers moyens de mémorisation BP peuvent être soit le HLR dans le cas d'un réseau 3G, soit le HSS (pour « Home Subscriber Server ») dans le cas d'un réseau IMS.

On peut également envisager de constituer une base de données d'information en réalisant l'agrégation ou la synthèse, avec mise à jour, des profils des utilisateurs à partir des informations fournies par l'opérateur de télécommunications (second réseau R2) et/ou l'opérateur de diffusion (premier réseau R1) et/ou de l'étude du comportement des utilisateurs (par exemple par l'analyse de leurs requêtes, votes et analogues).

Lorsque le module de contrôle MC reçoit une requête d'obtention d'application de service en provenance d'un terminal requérant Ti, il détermine tout d'abord auprès du module de génération MG2 le groupe d'applications de service et le groupe de critère(s) qui correspondent au point d'application objet de la requête. Puis, selon que le groupe déterminé contient tel et/ou tel critère il accède aux premiers BP et/ou seconds BL moyens de mémorisation afin de déterminer les données de profil et/ou de type et/ou de localisation (et/ou de type de réseau) qui correspondent au terminal Ti. Par exemple, il détermine à la fois la localisation du terminal Ti et le profil de son utilisateur.

Ensuite, le module de contrôle MC applique au groupe d'applications de service déterminé les données de profil et/ou de type et/ou de localisation et/ou de type de réseau déterminées, qui constituent le groupe de critère(s) qui lui est associé. Cela lui permet de déterminer une application de service personnalisée pour le terminal requérant Ti. Il génère alors un message comportant des données représentatives de cette application de service déterminée et communique ce message à son équipement de contrôle EC afin qu'il le transmette au terminal requérant Ti via sa voie de retour (du second réseau R2).

Lorsque le terminal requérant Ti reçoit ce message, il le communique à son module d'affichage MA afin qu'il exécute l'application de service qui est définie par les données qu'il contient, sous le contrôle de son module de traitement MT.

Une troisième possibilité consiste à réaliser un mélange des première et deuxième possibilités. Comme dans la première possibilité le module de définition MD, et plus précisément son premier sous-module M1, sont agencés de manière à intégrer dans les contenus à diffuser des données qui représentent une première partie de chaque application de service de chaque groupe correspondant à un point d'interactivité. Par ailleurs, comme dans la deuxième possibilité, l'équipement de contrôle EC peut comprendre un module de génération MG2, mais dans lequel ne sont stockés que des groupes de secondes parties d'applications de service, complémentaires des premières parties stockées dans le module de définition MD, de préférence en correspondance de points d'interactivité.

Chaque fois qu'un module de traitement MT détecte un point d'interactivité dans un flux reçu par le module d'affichage MA de son terminal TI, il adresse à l'équipement de contrôle EC (par le biais de son terminal Ti et via une voie de retour du second réseau R2) une requête d'obtention de secondes parties d'applications de service, contenant de préférence le point d'interactivité détecté.

Lorsque l'équipement de contrôle EC reçoit une telle requête d'un terminal requérant Ti (sur une voie de retour), il la transmet à son module de contrôle MC qui détermine auprès de son module de génération MG2 les données qui représentent les secondes parties des applications de service du groupe associé au point d'interactivité désigné par la requête reçue.

Le module de contrôle MC génère alors un message comportant les données déterminées, représentatives des secondes parties des applications de service, et communique ce message à son équipement de contrôle EC afin qu'il le transmette au terminal requérant Ti via sa voie de retour (du second réseau R2).

Lorsque le terminal requérant Ti reçoit ce message, il le communique à son module traitement MT afin qu'il détermine localement l'application de service qui doit être exécutée par le module d'affichage MA associé en fonction de chaque critère choisi. Pour ce faire, il utilise tout d'abord les données des premières parties des applications de service extraites des flux de données de contenu et les données des secondes parties de ces mêmes applications de service fournies par l'équipement de contrôle EC afin de reconstituer le groupe d'applications de service correspondant au point d'interactivité détecté. Puis, il applique chaque critère choisi aux données d'application afin de sélectionner celles qui représentent l'application qui doit être exécutée localement par le module d'affichage MA.

Comme dans la première possibilité, chaque critère à appliquer localement peut être soit défini localement par l'utilisateur du terminal Ti, soit défini à distance par l'opérateur de diffusion (et transmis par l'équipement de contrôle EC via une voie de retour du second réseau R2).

Une fois qu'un module de traitement MT a déterminé une application de service, il la communique au module d'affichage MA de son terminal Ti afin qu'il l'exécute.

Le type des messages et requêtes, qui sont échangés entre les terminaux Ti et l'équipement de contrôle EC sur les voies de retour du second réseau R2, dépend du type du terminal Ti. Ils peuvent donc se présenter sous la forme de messages SMS (pour « Short Message System » - message court) ou de messages MMS (pour « Multimedia Messaging Service » - message court multimédia) ou de messages WAP (pour « Wireless Application Protocol » - protocole d'accès à l'Internet sans fil) ou de courriels (ou « e-mail ») ou des requêtes IP ou des requêtes au format propriétaire, via des serveurs dédiés, ou encore de pages HTML.

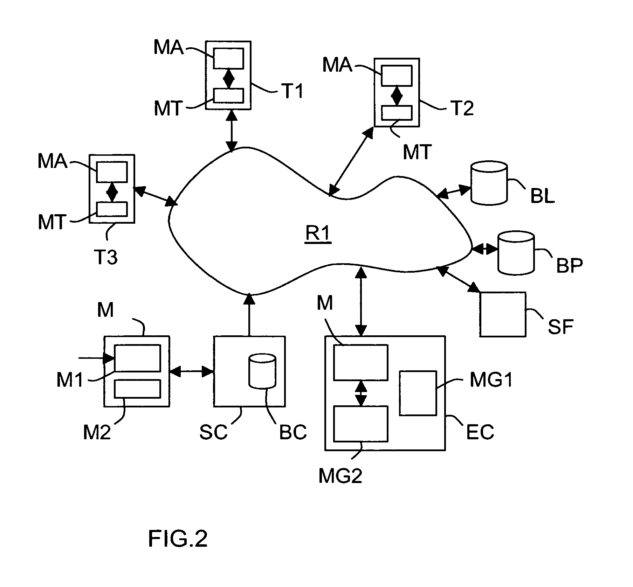

On se réfère maintenant à la figure 2 pour décrire un second exemple de mise en oeuvre de l'invention.

Dans ce second exemple, un unique (premier) réseau R1 assure à la fois la diffusion monodirectionnelle de contenus vers des terminaux et les communications bidirectionnelles entre le réseau R1 et lesdits terminaux, sur des voies de retour. Un tel réseau R1 est par exemple un réseau fixe câblé ou un réseau xDSL, comportant des lignes de transmission à moyen ou haut débit (pour la diffusion) et des lignes de transmission à petit débit (pour les communications).

Le mode de fonctionnement du système de diffusion présente de nombreuses similitudes avec celui décrit précédemment en référence à la figure 1. La différence principale réside dans le fait que tous les modules (MD) et équipements (SC, EC, BP, BL, SF, Ti), qui interviennent dans l'une ou l'autre des trois possibilités évoquées (lesquelles s'appliquent également ici), sont désormais couplés à un unique réseau R1 (pris dans sa globalité et pas seulement dans sa partie dédiée à la diffusion monodirectionnelle). Par ailleurs, les terminaux Ti sont désormais des terminaux fixes sauf dans le cas de réseaux de type WiFi, WiMAX et analogues. Par ailleurs, dans le cas d'un unique réseau R1, la diffusion se fait toujours par des canaux de transmission monodirectionnelle, tandis que les communications se font par des canaux de communication définissant des voies de retour. En outre, il peut être nécessaire de prévoir une corrélation entre les canaux de diffusion et les voies de retour, notamment pour déterminer la localisation des terminaux.

Trois exemples illustratifs et non limitatifs sont donnés ci-après.

Un premier exemple consiste à définir deux groupes d'utilisateurs : un premier auquel est proposée une application de vote à un instant donné d'un programme diffusé, et un second auquel est proposée une application de téléchargement (éventuellement payant) de sonneries de téléphone à ce même instant donné et pour le même programme diffusé.

Un deuxième exemple consiste à définir deux groupes d'utilisateurs : un premier (par exemple un groupe mâle) auquel est proposée une application d'affichage d'un premier groupe de publicités à un instant donné d'un programme diffusé, et un second (par exemple un groupe femelle) auquel est proposée une application d'affichage d'un second groupe de publicités (au moins partiellement différent du premier groupe) à ce même instant donné et pour le même programme diffusé.

Un troisième exemple consiste à définir deux groupes d'utilisateurs : un premier (par exemple situé dans une première zone géographique) auquel est proposée une application de vote classique (questions/réponses) à un instant donné d'un programme diffusé, et un second (par exemple situé dans une seconde zone géographique) auquel est proposée la même application de vote à ce même instant donné et pour le même programme diffusé, mais avec des questions intégrant dans un champ dédié une ou plusieurs informations personnalisées, comme par exemple le nom de chaque utilisateur ou sa position géographique ou encore son age (éventuellement le jour de son anniversaire).

Le système de diffusion selon l'invention, et notamment son module de définition MD et ses modules de traitement MT, ainsi que ses éventuels module de contrôle MC, module de gestion de requêtes d'application de service MG1 et module de génération MG2, peuvent être réalisés sous la forme de circuits électroniques, de modules logiciels (ou informatiques), ou d'une combinaison de circuits et de logiciels.

Lorsque les modules de traitement MT sont intégralement réalisés sous la forme d'un module logiciel, ils peuvent être soit implantés dans les terminaux lors de leur fabrication ou de leur mise en service, soit téléchargés dans les terminaux via leurs réseaux de rattachement.

L'invention ne se limite pas aux modes de réalisation de système de diffusion et de procédé de diffusion décrits ci-avant, seulement à titre d'exemple, mais elle englobe toutes les variantes que pourra envisager l'homme de l'art dans le cadre des revendications ci-après.

## Revendications

1. Procédé de diffusion de flux de données de contenu à destination de terminaux mobiles de radiocommunication (Ti) rattachés au moins à un premier réseau de diffusion (R1), tel qu'il consiste à insérer au moins des points d'interactivité dans des endroits choisis de contenus à diffuser sous forme de flux, désignant chacun un groupe d'applications de service au sein duquel une application doit être choisie et correspondant chacun au déclenchement à un instant choisi d'une application de service appartenant à un groupe d'au moins deux applications choisies, et, en cas de réception dans un terminal destinataire (Ti) desdits flux diffusés via ledit premier réseau (R1), à afficher les données qu'ils contiennent, et, en cas de détection d'un point d'interactivité, à déterminer l'application de service correspondante en fonction d'au moins un ensemble de critères choisis relatifs au moins au profil de l'utilisateur dudit terminal (Ti), au type dudit terminal (Ti), et au type de voie de retour, de sorte que cette application de service soit exécutée par ledit terminal (Ti), et lors de l'exécution de ladite application de service dans ledit terminal (Ti), ladite application de service étant une application de service interactive, on procède à l'échange de messages par une voie retour établie entre ledit terminal (Ti) et une adresse choisie dudit premier réseau (R1) ou d'un second réseau de communication bidirectionnel (R2), sous contrôle de l'utilisateur dudit terminal (Ti).

2. Procédé selon l'une des revendications 1, **caractérisé en ce que** certaines au moins desdites applications de service sont de type interactif.

3. Procédé selon la revendication 2, **caractérisé en ce que** lesdites applications de service interactives sont choisies dans un groupe comprenant au moins une application de pari, une application de vote, une application d'achat et une application de téléchargement de données personnalisées.

4. Procédé selon la revendication 1, **caractérisé en ce que** lesdites données personnalisées sont choisies dans un groupe comprenant au moins des sonneries de téléphone, des textes, des vidéos, des publicités, des jeux, des informations de sécurité et des informations générales ou spécialisées.

5. Procédé selon l'une des revendications 1 à 4, **caractérisé en ce que** l'une au moins desdites applications de service est dédiée à l'affichage d'au moins une publicité choisie et/ou d'informations non interactives.

6. Procédé selon l'une des revendications 1 à 5, **caractérisé en ce que** l'on intègre dans lesdits contenus à diffuser les données représentatives des applications de service de chaque groupe correspondant à un point d'interactivité, et on détermine dans un terminal (Ti) l'application de service à exécuter en fonction de chaque critère choisi.

7. Procédé selon l'une des revendications 1 à 5, **caractérisé en ce que** l'on intègre dans lesdits contenus à diffuser des données représentatives d'une première partie de chaque application de service de chaque groupe correspondant à un point d'interactivité, et en cas de détection d'un point d'interactivité dans un terminal (Ti), on transmet à une adresse choisie du premier réseau (R1) ou second (R2) réseau, via une voie de retour qu'il comprend, une requête d'obtention de chaque seconde partie complémentaire d'une première partie d'application de service reçue, puis, à réception de chaque seconde partie, on détermine dans ledit terminal (Ti) ladite application de service en fonction de chaque critère choisi afin qu'elle puisse être exécutée.

8. Procédé selon l'une des revendications 6 et 7, **caractérisé en ce que** chaque critère choisi est défini par l'utilisateur dudit terminal (Ti).

9. Procédé selon l'une des revendications 6 et 7, **caractérisé en ce que** chaque critère choisi est défini par l'opérateur de diffusion et transmis au terminal correspondant (Ti) via une voie de retour.

10. Procédé selon l'une des revendications 1 à 5, **caractérisé en ce qu'**en cas de détection d'un point d'interactivité dans un terminal (Ti), on transmet à une adresse choisie du premier (R1) ou second (R2) réseau, via une voie de retour, une requête d'obtention d'application de service, puis, à réception de cette requête, on détermine l'application de service requise en fonction de chaque critère choisi correspondant audit terminal requérant (Ti) et défini par l'opérateur de diffusion, et on transmet ladite application de service audit terminal requérant (Ti) afin qu'il puisse l'exécuter.

11. Système de diffusion de flux de données de contenu à destination de terminaux mobiles de radiocommunication (Ti) rattachés au moins à un premier réseau de diffusion (R1), tel qu'il comprend au moins i) des moyens de définition de contenus de données (MD) agencés pour insérer au moins des points d'interactivité dans des endroits choisis de contenus à diffuser sous forme de flux, désignant chacun un groupe d'applications de service au sein duquel une application doit être choisie et correspondant chacun au déclenchement à un instant choisi d'une application de service appartenant à un groupe d'au moins deux applications choisies, ii) un serveur de contenus (SC) agencé pour diffuser à destination de terminaux (Ti), via ledit premier réseau (R1), des flux de données de contenus fournis par lesdits moyens de définition (MD), et iii) des moyens de traitement (MT) implantés dans des terminaux (Ti), comportant en outre des moyens d'affichage (MA) agencés pour afficher des données contenues dans des flux reçus dudit serveur de contenus (SC), et agencés pour analyser les données desdits flux afin, en cas de détection d'un point d'interactivité, de déterminer l'application de service correspondante en fonction d'au moins un ensemble de critères choisis relatifs au moins au profil de l'utilisateur dudit terminal (Ti), au type dudit terminal (Ti), et au type de voie de retour, et d'ordonner aux moyens d'affichage (MA) de leur terminal (Ti) d'exécuter cette application de service, et en ce que le système comprend en outre un équipement de contrôle (EC), accessible par une voie de retour dudit premier réseau (R1) ou d'un second réseau de communication bidirectionnel (R2), à une adresse choisie, et comportant des moyens de gestion de requêtes d'application de service (MG1), et en ce que lesdits moyens de traitement (MT) d'un terminal (Ti) sont agencés, en cas d'exécution d'une application de service de type interactif par lesdits moyens d'affichage (MA) dudit terminal (Ti), pour échanger des messages avec lesdits moyens de gestion de requête d'application de service (MG1), via une voie de retour établie entre son équipement de contrôle (EC) et ledit terminal (Ti), sous contrôle de l'utilisateur dudit terminal (Ti).

12. Système selon la revendication 11, **caractérisé en ce que** chaque critère est choisi dans un groupe comprenant au moins un critère de profile d'utilisateur de terminal (Ti), un critère de type de terminal (Ti), un critère de localisation de terminal (Ti), un critère de type de voie de retour.

13. Système selon l'une des revendications 11 à 12, **caractérisé en ce que** lesdits moyens de définition (MD) sont agencés pour intégrer dans lesdits contenus à diffuser les données représentatives des applications de service de chaque groupe correspondant à un point d'interactivité, et **en ce que** lesdits moyens de traitement (MT) de chaque terminal (Ti) sont agencés pour déterminer l'application de service, devant être exécutée par lesdits moyens d'affichage (MA) dudit terminal (Ti), en fonction de chaque critère choisi.

14. Système selon la revendication 11, **caractérisé en ce que** lesdits moyens de définition (MD) sont agencés pour intégrer dans lesdits contenus à diffuser des données représentatives d'une première partie de chaque application de service de chaque groupe correspondant à un point d'interactivité, **en ce que** ledit équipement de contrôle (EC) comprend des moyens de contrôle (MC) agencés pour déterminer sur requête des données représentatives de secondes parties d'applications de service, complémentaires des premières parties, et **en ce que** lesdits moyens de traitement (MT) de chaque terminal (Ti) sont agencés, en cas de détection d'un point d'interactivité, pour adresser audit équipement de contrôle (EC), via ladite voie de retour, une requête d'obtention de chaque seconde partie complémentaire d'une première partie d'application de service reçue, et, à réception de chaque seconde partie, pour déterminer ladite application de service en fonction de chaque critère choisi et pour ordonner auxdits moyens d'affichage (MA) dudit terminal (Ti) d'exécuter cette application de service.

15. Système selon la revendication 14, **caractérisé en ce que** lesdits moyens de traitement (MT) de chaque terminal (Ti) sont agencés pour stocker chaque critère choisi défini par l'utilisateur dudit terminal (Ti).

16. Système selon l'une des revendications 14 et 15, **caractérisé en ce que** lesdits moyens de traitement (MT) de chaque terminal (Ti) sont agencés pour stocker chaque critère choisi défini par l'opérateur de diffusion et transmis au terminal correspondant (Ti) via ladite voie de retour.

17. Système selon la revendication 11, **caractérisé en ce que** lesdits moyens de traitement (MT) de chaque terminal (Ti) sont agencés, en cas de détection d'un point d'interactivité, pour adresser audit équipement de contrôle (EC), via ladite voie de retour, une requête d'obtention d'application de service, et **en ce que** ledit équipement de contrôle (EC) comprend des moyens de contrôle (MC) agencés, à réception d'une requête d'obtention d'application de service, pour déterminer chaque définition de critère correspondant au terminal requérant (Ti) et des données représentatives d'applications de service, puis pour déterminer l'application de service requise en fonction de chaque critère déterminé, et pour générer un message comportant des données représentatives de ladite application de service déterminée afin que l'équipement de contrôle (EC) le transmette au terminal requérant (Ti) via ladite voie de retour, puis que les moyens d'affichage (MA) dudit terminal requérant (Ti) exécutent cette application de service sous le contrôle de ses moyens dé traitement (MT).

## Claims

1. A method of broadcasting content data streams to mobile radio communication terminals (Ti) attached to at least one first broadcast network (R1), consisting of inserting at least interactivity points in chosen places in content to be broadcast in the form of streams, each designating a group of service applications within which an application must be chosen and each corresponding to the triggering at a chosen moment of a service application belonging to a group of at least two chosen applications, and, in the event that said streams broadcast via said first network (R1) are received in a recipient terminal (Ti), of displaying the data that they contain, and, in the event that an interactivity point is detected, of determining the corresponding service application based on at least one set of chosen criteria related to at least one profile of the user of said terminal (Ti), to said terminal's (Ti) type, and to the type of return channel, so that this service application is executed by said terminal (Tu), and during the execution of said service application in said terminal (Ti), said service application being an interactive service applications, messages are exchanged by a return channel established between said terminal (Ti) and a chosen address of said first network (R1) or a second bidirectional communication network (R2), under the control of the user of said terminal (Ti).

2. A method according to claim 1, **characterized in that** at least some of said service applications are interactive.

3. A method according to claim 2, **characterized in that** said interactive service applications are chosen from a group comprising at least one betting application, one voting application, one purchasing application, and one custom data downloading application.

4. A method according to claim 1, **characterized in that** said custom data is chosen from a group comprising at least telephone ringtones, texts, videos, advertisements, games, safety information, and general or specialized information.

5. A method according to one of the claims 1 to 4, **characterized in that** at least one of said service applications is dedicated to the displaying of at least one chosen advertisement and/or non-interactive information.

6. A method according to one of the claims 1 to 5, **characterized in that** data representative of the service applications of each group corresponding to an interactivity point is integrated into said content to be broadcast, and the service application to be executed is determined within a terminal (Ti) based on each chosen criterion.

7. A method according to one of the claims 1 to 5, **characterized in that** data representative of a first part of each service application of each group corresponding to an interactivity point is integrated into said content to be broadcast, and in the event that an interactivity point is detected within a terminal (Ti), a request to obtain each complementary second part of a received service application's first part is transmitted to a chosen address of the first network (R1) or second network (R2), via a return channel that it comprises, then, upon the receipt of each second part, said service application is determined within said terminal (Ti) based on each chosen criterion so that it can be run.

8. A method according to one of the claims 6 and 7, **characterized in that** each chosen criterion is defined by the user of said terminal (Ti).

9. A method according to one of the claims 6 and 7, **characterized in that** each chosen criterion is defined by the broadcast operator and transmitted to the corresponding terminal (Ti) via a return channel.

10. A method according to one of the claims 1 to 5, **characterized in that** if an interactivity point is detected in a terminal (Ti), a request to obtain a service application is transmitted to a chosen address of the first (R1) or second (R2) network, via a return channel, then, upon the receipt of that request, the required service application is determined based on each chosen criterion corresponding to said requesting terminal (Ti) and defined by the broadcast operator, and said service application is transmitted to said requesting terminal (Ti) so that it can execute it.

11. A system for broadcasting content data streams to mobile radio communication terminals (Ti) assigned to at least one first broadcast network (R1), comprising at least i) means for defining data content (MD) operative to insert at least interactivity points in chosen places in content to be broadcast in the form of streams, each designating a group of service applications within which an application must be chosen and each corresponding to the triggering at a chosen moment of a service application belonging to a group of at least two chosen applications, ii) a content server (SC) operative to broadcast to terminals (Ti), via said first network (R1), content data streams provided by said means of definition (MD), and iii) processing means (MT) installed in terminals (Ti), further comprising means of display (MA) operative to display data contained within the streams received from said content server (SC), and operative to analyze the data from said stream in order, in the event that an interactivity point is detected, to determine the corresponding service application based on at least one set of chosen criteria related at least to the profile of the user of said terminal (Ti), to the type of said terminal (Ti), and to the type of return channel, and to order the display means (MA) of their terminal (Ti) to execute that service application, and in that the system further comprises a control equipment (EC), accessible by a return channel of said first network (R1) or of a second bidirectional communication network (R2), at a chosen address, and comprising means of managing service application requests (MG1), and in that said processing means (MT) of a terminal (Ti) are operative, in the event that an interactive service application is run by said display means (MA) of said terminal (Ti), to exchange messages with said means of managing service application requests (MG1), via a return channel established between its control equipment (EC) and said terminal (Ti), under the control of the user of said terminal (Ti).

12. A system according to claim 11, **characterized in that** each criterion is chosen from a group comprising at least one terminal (Ti) user profile criterion, one terminal (Ti) type criterion, one terminal (Ti) location criterion, and one return channel criterion.

13. A system according to one of the claims 11 to 12, **characterized in that** said means of definition (MD) are operative to integrate into said content to be broadcast data representative of the service applications of each group corresponding to an interactivity point, and **in that** said processing means (MT) of each terminal (Ti) are operative to determine the service application to be executed by said display means (MA) of said terminal (Ti), based on each chosen criterion.

14. A system according to claim 11, **characterized in that** said means of definition (MD) are operative to integrate into said content to be broadcast data representative of a first part of each service application of each group corresponding to an interactivity point, and **in that** said control equipment (EC) comprises control means (MC) operative to determine upon request data representative of second parts of service applications, which complement the first parts, and **in that** said processing means (MT) of each terminal (Ti) are operative, in the event that an interactivity point is detected, to send to said control equipment (EC), via said return channel, a request to obtain each complementary second part of a received service application's first part, and, upon the receipt of each second part, to determine said service application based on each chosen criterion and to order said display means (MA) of said terminal (Ti) to execute that service application.

15. A system according to claim 14, **characterized in that** said processing means (MT) of each terminal (Ti) are operative to store each chosen criterion defined by the user of said terminal (Ti).

16. A system according to one of the claims 14 and 15, **characterized in that** said processing means (MT) of each terminal (Ti) are operative to store each chosen criterion defined by the broadcast operator and transmitted to the corresponding terminal (Ti) via said return channel.

17. A system according to claim 11, **characterized in that** said processing means (MT) of each terminal (Ti) are operative, in the event that an interactivity point is detected, to send to said control equipment (EC), via said return channel, a request to obtain a service application, and **in that** said control equipment (EC) comprises control means (MC) operative, upon the receipt of a request to obtain a service application, to determine each criterion definition corresponding to the requesting terminal (Ti) and data representative of service applications, then to determine the request service application based on each determined chosen criterion, and to generate a message comprising data representative of said determined service application so that the control equipment (EC) transmits it to the requesting terminal (Ti) via said return channel, then so that the display means (MA) of said requesting terminal (Ti) executes that service application under the control of its processing means (MT).

## Patentansprüche

1. Verfahren zur Übertragung von Inhaltsdatenströmen an mobile Funkkommunikationsendgeräte (Ti), die mindestens an ein erstes Broadcast-Netzwerk (R1) angeschlossen sind, welches darin besteht, zumindest Interaktivitätspunkte an ausgewählten Stellen von in der Form von Strömen auszustrahlenden Inhalten einzufügen, welche jeweils eine Gruppe von Dienstanwendungen bezeichnen, innerhalb welcher eine Anwendung zu wählen ist und jeweils dem Auslösen, zu einem gewählten Zeitpunkt, einer Dienstanwendung, welche einer Gruppe von mindestens zwei gewählten Anwendungen angehört, entspricht, und bei Empfang der besagten über das besagte erste Netzwerk (R1) übertragenen Ströme an einem Ziel-Endgerät (Ti) die darin enthaltenen Daten anzuzeigen, und, im Fall des Erkennens eines Interaktivitätspunktes, die entsprechende Dienstanwendung gemäß mindestens einer Gruppe von ausgewählten Kriterien zumindest in Bezug auf das Profil des Benutzers des besagten Endgeräts (Ti), auf den Typ des besagten Endgeräts (Ti), auf den Typ des Rückkopplungspfads zu bestimmen, so dass diese Dienstanforderung von dem besagten Endgerät (Ti) ausgeführt wird, und dass man bei der Ausführung der besagten Dienstanwendung in dem besagten Endgerät (Ti), wobei die besagte Dienstanwendung eine interaktive Dienstanwendung ist, über einen zwischen dem besagten Endgerät (Ti) und einer ausgewählten Adresse des besagten ersten Netzwerks (R1) oder eines zweiten bidirektionalen Kommunikationsnetzwerk (R2) hergestellten Rückkopplungspfad unter der Kontrolle des Benutzers des besagten Endgeräts (Ti) Nachrichten austauscht.

2. Verfahren nach Anspruch 1, **dadurch gekennzeichnet, dass** zumindest bestimmte der besagten Dienstanwendungen interaktiver Art sind.

3. Verfahren nach Anspruch 2, **dadurch gekennzeichnet, dass** die besagten interaktiven Dienstanwendungen in einer Gruppe, welche mindestens eine Wettanwendung, eine Stimmabgabeanwendung, eine Einkaufsanwendung und eine Anwendung für das Herunterladen von benutzerdefinierten Daten umfasst, ausgewählt werden.

4. Verfahren nach Anspruch 1, **dadurch gekennzeichnet, dass** die besagten benutzerdefinierten Daten in einer Gruppe, welche mindestens Telefonklingeltöne, Textdateien, Videos, Werbungen, Spiele, Sicherheitsinformationen und allgemeine oder fachbezogene Informationen umfasst, ausgewählt werden.

5. Verfahren nach einem der Ansprüche 1 bis 4, **dadurch gekennzeichnet, dass** mindestens eine der besagten Dienstanwendungen für das Anzeigen mindestens einer ausgewählten Werbung und/oder von nicht interaktiven Informationen bestimmt ist.

6. Verfahren nach einem der Ansprüche 1 bis 5, **dadurch gekennzeichnet, dass** man die Daten, die für die Dienstanwendungen einer jeden einem Interaktivitätspunkt entsprechenden Gruppe repräsentativ sind, in die besagten zu übertragenden Inhalte integriert und in einem Endgerät (Ti) die auszuführende Dienstanwendung gemäß jedem ausgewählten Kriterium bestimmt.

7. Verfahren nach einem der Ansprüche 1 bis 5, **dadurch gekennzeichnet, dass** man Daten, die für einen ersten Teil einer jeden Dienstanwendung jeder einem Interaktivitätspunkt entsprechenden Gruppe repräsentativ sind, in die besagten zu übertragenden Inhalte integriert, und dass man im Fall des Erkennens eines Interaktivitätspunktes in einem Endgerät (Ti) eine Anforderung für den Empfang jedes zweiten Teils, welcher einen ersten Teil der empfangenen Dienstanwendung ergänzt, an eine ausgewählte Adresse des ersten Netzwerks (R1) oder des zweiten Netzwerks (R2) über einen darin enthaltenen Rückkopplungspfad sendet, und dass man nach Empfang eines jeden zweiten Teils die besagte Dienstanwendung gemäß einem jeden ausgewählten Kriterium in dem besagten Endgerät (Ti) bestimmt, so dass sie ausgeführt werden kann.

8. Verfahren nach einem der Ansprüche 6 und 7, **dadurch gekennzeichnet, dass** jedes ausgewählte Kriterium vom Benutzer des besagten Endgeräts (Ti) bestimmt wird.

9. Verfahren nach einem der Ansprüche 6 und 7, **dadurch gekennzeichnet, dass** jedes ausgewählte Kriterium vom Dienstanbieter definiert und über einen Rückkopplungspfad an das entsprechende Endgerät (Ti) übertragen wird.

10. Verfahren nach einem der Ansprüche 1 bis 5, **dadurch gekennzeichnet, dass** man im Fall eines Interaktivitätspunktes in einem Endgerät (Ti) eine Anforderung für das Einholen einer Dienstanwendung über einen Rückkopplungspfad an eine Adresse des ersten (R1) oder des zweiten (R2) Netzwerks überträgt, und dass man nach Empfang dieser Anforderung die erforderliche Dienstanwendung gemäß einem jeden ausgewählten Kriterium, welches dem besagten anfordernden Endgerät (Ti) entspricht und vom Dienstanbieter definiert wird, bestimmt, und dass man die besagte Dienstanwendung an das besagte anfordernde Endgerät (Ti) überträgt, damit es diese ausführen kann.

11. System zur Übertragung von Inhaltsdatenströmen an mobile Funkkommunikationsendgeräte (Ti), die mindestens an ein erstes Broadcast-Netzwerk (R1) angeschlossen sind, mindestens umfassend i) Mittel zum Definieren von Dateninhalten (MD), die dazu ausgelegt sind, zumindest Interaktivitätspunkte an ausgewählten Stellen von in der Form von Strömen zu übertragenden Inhalten einzufügen, welche jeweils eine Gruppe von Dienstanwendungen, innerhalb welcher eine Anwendung auszuwählen ist, bezeichnen und jeweils dem Auslösen, zu einem ausgewählten Zeitpunkt, einer Dienstanwendung entspricht, welche einer Gruppe von mindestens zwei ausgewählten Anwendungen angehört, ii) einen Inhaltsserver (SC), welcher für das Ausstrahlen von von den besagten Definiermitteln (MD) bereitgestellten Inhaltsdatenströmen über das besagte erste Netzwerk (R1) an Endgeräte (Ti) ausgelegt ist, und iii) Verarbeitungsmittel (MT), die in Endgeräten (Ti) installiert sind, welche darüber hinaus Anzeigemittel (MA) aufweisen, die dazu ausgelegt sind, die in von dem besagten Inhaltsserver (SC) empfangenen Inhalten enthaltenen Daten anzuzeigen, und dazu ausgelegt sind, die Daten der besagten Ströme zu analysieren, um bei Erkennen eines Interaktivitätspunktes die entsprechende Dienstanwendung gemäß mindestens einer Gruppe von ausgewählten Kriterien in Bezug auf mindestens das Profil des Benutzers des besagten Endgeräts (Ti), auf den Typ des besagten Endgeräts (Ti) und auf den Typ des Rückkopplungspfads zu bestimmen und die Anzeigemittel (MA) ihres Endgeräts (Ti) anzuweisen, diese Dienstanwendung auszuführen, wobei das System weiterhin eine Steuereinrichtung (EC) umfasst, welche über einen Rückkopplungspfad des besagten ersten Netzwerks (T1) oder eines zweiten bidirektionalen Kommunikationsnetzwerks (R2) zugänglich ist, an einer ausgewählten Adresse, und Mittel zur Verwaltung von Dienstanwendungsanforderungen (MG1) umfasst, wobei die besagten Verarbeitungsmittel (MT) eines Endgeräts (Ti) dazu ausgelegt sind, bei der Ausführung einer Dienstanwendung interaktiver Art durch die besagten Anzeigemittel (MA) des besagten Endgeräts (Ti) mit den besagten Mitteln zur Verwaltung von Dienstanwendungsanforderungen (MG1) über einen zwischen deren Steuereinrichtung (EC) und dem besagten Endgerät (Ti) hergestellten Rückkopplungspfad, unter der Kontrolle des Benutzers des besagten Endgeräts (Ti) Nachrichten auszutauschen.

12. System nach Anspruch 11, **dadurch gekennzeichnet, dass** jedes Kriterium in einer Gruppe gewählt wird, welche mindestens die folgenden Kriterien umfasst: Profil eines Benutzers des Endgeräts (Ti), Typ des Endgeräts (Ti), Standortbestimmung des Endgeräts (Ti), Typ des Rückkopplungspfads.

13. System nach einem der Ansprüche 11 bis 12, **dadurch gekennzeichnet, dass** die besagten Definiermittel (NAD) dazu ausgelegt sind, die Daten, die für Dienstanwendungen jeder einem Interaktivitätspunkt entsprechenden Gruppe repräsentativ sind, in die besagten auszustrahlenden Inhalte zu integrieren, und dass die besagten Verarbeitungsmittel (MT) eines jeden Endgeräts (Ti) dazu ausgelegt sind, die Dienstanwendung, die von den besagten Anzeigemittel (MA) des besagten Endgeräts (Ti) auszuführen ist, gemäß einem jeden ausgewählten Kriterium zu bestimmen.

14. System nach Anspruch 11, **dadurch gekennzeichnet, dass** die besagten Definiermittel (MD) dazu ausgelegt sind, Daten, die für einen ersten Teil einer jeden Dienstanwendung jeder einem Interaktivitätspunkt entsprechenden Gruppe repräsentativ sind, in die besagten auszustrahlenden Inhalte zu integrieren, dass die besagte Steuereinrichtung (EC) Steuermittel (MC) aufweist, die dazu ausgelegt sind, auf Aufforderung Daten, die für zweite Teile von Dienstanwendungen, welche die ersten Teile ergänzen, repräsentativ sind, zu bestimmen, und dass die besagten Verarbeitungsmittel (MT) eines jeden Endgeräts (Ti) dazu ausgelegt sind, bei Erkennen eines Interaktivitätspunktes eine Anforderung zum Einholen eines jeden zweiten Teils, welcher einen empfangenen ersten Dienstanwendungsteil ergänzt, über den besagten Rückkopplungspfad an die besagte Steuereinrichtung (EC) zu senden und nach Empfang eines jeden zweiten Teils die besagte Dienstanwendung gemäß einem jeden ausgewählten Kriterium zu bestimmen und die besagten Anzeigemittel (MA) des besagten Endgeräts (Ti) anzuweisen, diese Dienstanwendung auszuführen.

15. System nach Anspruch 14, **dadurch gekennzeichnet, dass** die besagten Verarbeitungsmittel (MT) eines jeden Endgeräts (Ti) dazu ausgelegt sind, jedes ausgewählte, vom Benutzer des besagten Endgeräts (Ti) definierte Kriterium zu speichern.

16. System nach einem der Ansprüche 14 und 15, **dadurch gekennzeichnet, dass** die besagten Verarbeitungsmittel (MT) eines jeden Endgeräts (TI) dazu ausgelegt sind, jedes ausgewählte, vom Dienstanbieter definierte und an das entsprechende Endgerät (Ti) über den besagten Rückkopplungspfad übertragene Kriterium zu speichern.

17. System nach Anspruch 11, **dadurch gekennzeichnet, dass** die besagten Verarbeitungsmittel (MT) eines jeden Endgeräts (Ti) dazu ausgelegt sind, bei Erkennen eines Interaktivitätspunktes eine Anforderung zum Einholen einer Dienstanwendung über den besagten Rückkopplungspfad an die besagte Steuereinrichtung (EC) zu senden, und dass die besagte Steuereinrichtung (EC) Steuermittel (MC) aufweist, die dazu ausgelegt sind, nach Empfang einer Anforderung zum Einholen einer Dienstanwendung jede Definition eines dem anfordernden Endgerät (Ti) entsprechenden Kriteriums (Ti) sowie Daten, die für Dienstanwendungen repräsentativ sind, zu bestimmen und anschließend die erforderliche Dienstanwendung gemäß einem jeden bestimmten Kriterium zu bestimmen, und eine Nachricht mit den für die besagte bestimmte Dienstanwendung repräsentativen Daten zu erzeugen, damit die Steuereinrichtung (EC) diese über den besagten Rückkopplungspfad an das anfordernde Endgerät (Ti) überträgt, und dass die Anzeigemittel (MA) des besagten anfordernden Endgeräts (Ti) diese Dienstanwendung anschließend unter der Kontrolle dieser Verarbeitungsmittel (MT) ausführen.
